# EUROPÄISCHE PATENTSCHRIFT

(11) **EP 0 935 160 B1**
(45) Veröffentlichungstag und Bekanntmachung des Hinweises auf die Patenterteilung: **02.10.2002**
(21) Anmeldenummer: 98101906.0
(22) Anmeldetag: 04.02.1998
(51) Int. Cl.: G03B 27/73, G03B 27/62, G03B 1/50, H04N 1/00

(54) **Fotoelektrische Abtastvorrichtung und damit ausgestattetes fotografisches Kopiergerät**
Photoelectric scanning device and photographic printing apparatus incorporating it
Dispositif de balayage photoélectrique et tireuse photographique comportant un tel dispositif

(43) Veröffentlichungstag der Anmeldung: 11.08.1999
(73) Patentinhaber: IMIP LLC, Wilmington, Delaware 19801 (US)
(72) Erfinder: Knecht, Hugo, 8165 Schöfflisdorf (CH)
(74) Vertreter: Freeman, Avi

(56) Entgegenhaltungen:
- US-A- 4 092 067
- US-A- 4 252 436
- US-A- 4 647 190
- US-A- 5 184 227
- US-A- 5 444 514

## Beschreibung

Die Erfindung betrifft eine Abtastvorrichtung zur im wesentlichen punktweisen fotoelektrischen Ausmessung eines fotografischen Films gemäss dem Oberbegriff des unabhängigen Anspruchs 1 sowie ein mit einer solchen Abtastvorrichtung ausgestattetes fotografisches Kopiergerät, insbesondere ein zur Verarbeitung von Einzelfilmen ausgelegtes Minilab, gemäss dem Oberbegriff des Anspruchs 9.

Fotografische Kopiergeräte sind heute fast ausnahmslos mit einem sogenannten Scanner ausgerüstet, der die Bilder der zu kopierenden Filme mit mehr oder weniger hoher Auflösung bildelementweise fotoelektrisch abzutasten gestattet, wobei verschiedene optische Anordnungen zum Einsatz kommen. Die vom Scanner erzeugten, die Bildinformationen darstellenden, digitalen elektrischen Abtastsignale werden bei klassischen optischen Kopiergeräten (Printern) zur Belichtungssteuerung bzw. -korrektur ausgewertet. Bei moderneren, sogenannten digitalen Kopiergeräten werden die Abtastsignale nach geeigneter Verarbeitung zur Ansteuerung einer digitalen Bilderzeugungseinrichtung, beispielsweise etwa eines Farbdruckers oder einer digitalen Belichtungseinrichtung verwendet. Eine befriedigende Bildqualität kann dabei naturgemäß nur mit relativ hochauflösenden Scannern und Bilderzeugungseinrichtungen erzielt werden.

Eine hochauflösende fotoelektrische Abtastung stellt besondere Anforderungen (auch) an die mechanische Präzision der Abtastvorrichtung. Damit bei der Abtastung eines Films keine Positionierungsfehler auftreten, muss der Film wenigstens im Bereich der Abtaststelle sehr exakt geführt werden. Dies ist nur möglich, wenn die dafür vorgesehenen Führungsorgane in der Abtastvorrichtung exakt auf die Dimensionen (Breite) des Films abgestimmt sind. Bei einem Wechsel des Filmformats müssen also auch die Führungsorgane entsprechend angepasst werden, was nichts anderes bedeutet, als dass entweder für jedes Filmformat eine eigene Abtasteinrichtung vorgesehen sein oder die Abtasteinrichtung bei jedem Wechsel des Filmformats entsprechend umgerüstet werden muss. Da aber in der Praxis, speziell bei einem Minilab, mit häufig wechselnden Filmformaten gerechnet werden muss, wäre dies sehr umständlich.

Die US-A-4,252,436 offenbart eine Abtastvorrichtung mit einer Transporteinrichtung, einer Führungseinrichtung, einer Beleuchtungseinrichtung, einer photoelektrischen Wandlereinrichtung sowie optischen Mitteln, wobei die Führungseinrichtung eine in der Abtastzone angeordnet, auch motorisch selektiv verstellbare Wechselbühne umfasst, welche zur mechanischen Führung und Positionierung von Filmen mindestens zweier unterschiedlicher Formate ausgebildet ist.

Die US-A 5,444,514 zeigt ebenfalls eine selektiv motorisch verstellbare Wechselbühne, die zur Führung und Positionierung von Filmen mindestens zweier unterschiedlicher Formate ausgebildet ist.

Aus der US-A-4,092,067 ist eine Abtastvorrichtung zum Messen der Filmparameter zum Steuern der Belichtung und Filterung beim Kopieren bekannt, die bei einem fotografischen Kopiergerät vorgesehen ist.

Durch die vorliegende Erfindung soll nun eine Abtastvorrichtung der gattungsgemäßen Art dahingehend verbessert werden, dass sie ohne umständliches Umrüsten Filme unterschiedlichen Formats besser verarbeiten kann.

Die Lösung dieser der Erfindung zugrundeliegenden Aufgabe ergibt sich aus den im kennzeichnenden Teil des unabhängigen Anspruchs 1 beschriebenen Merkmalen der erfindungsgemäßen Abtastvorrichtung.

Gemäss dem Hauptaspekt der Erfindung ist die Abtastvorrichtung also mit einer Wechselbühne für zwei oder mehrere Filmformate ausgerüstet. Die Wechselbühne ist dabei mit zwei oder mehreren Anordnungen von Führungsorganen für je ein Filmformat ausgestattet, und diese Anordnungen von Führungsorganen werden je nach Filmformat selektiv in den Transportpfad des Films eingeschaltet, so dass jeder Film jeweils immer von den richtigen, auf sein Format abgestimmten Führungsorganen exakt geführt wird und Positionierungsfehler bei der Abtastung vermieden werden. Dabei ist jedem Transportpfad eine Abbildungsoptik zugeordnet.

Die wechselweise Auswahl der einzelnen Anordnungen von Führungsorganen erfolgt dabei gemäß einem weiteren wichtigen Aspekt der Erfindung vollautomatisch, indem die Filmbreite an geeigneter Stelle des Transportwegs des Films z.B. mittels einer Lichtschrankenanordnung oder eines anderen Fühlers bestimmt wird und die Wechselbühne entsprechend motorisch verstellt wird. Selbstverständlich ist auch eine Verstellung von Hand möglich. Alternativ können selbstverständlich auch mehrere Filmbühnen vorgesehen sein, die selektiv in den Transportpfad eingebracht werden können.

Weitere vorteilhafte and besonders zweckmäßige Ausgestaltungen der erfindungsgemäßen Abtastvorrichtung sind in den abhängigen Ansprüchen beschrieben.

Die erfindungsgemäße Abtastvorrichtung ist besonders geeignet zum Einsatz in einem digitalen fotografischen Kopiergerät gemäß dem Anspruch 9. Ein weiterer Gegenstand der vorliegenden Erfindung ist daher auch ein mit einer solchen Abtastvorrichtung ausgestattetes, insbesondere digitales Kopiergerät, insbesondere ein für die Verarbeitung von Einzelfilmen ausgelegtes Minilab. Besonders zweckmäßige Ausgestaltungen des erfindungsgemäßen Kopiergeräts sind in den abhängigen Ansprüchen 10 und 11 beschrieben.

Im folgenden wird die Erfindung anhand der Zeichnung naher erläutert. Es zeigen:
- Fig. 1: eine schematische Gesamtansicht eines typischen Ausführungsbeispiels der erfindungsgemäßen Abtastvorrichtung,
- Fig. 2-5: je einen schematischen Längsschnitt durch die Abtastvorrichtung in verschiedenen Funktionsphasen,
- Fig. 6: eine Schrägansicht der Wechselbühne der Abtastvorrichtung,
- Fig. 7-9: eine Unteransicht, eine Seitenansicht und eine Vorderansicht der Wechselbühne gemäss Fig.6,
- Fig. 10: eine schematische Gesamtansicht eines erfindungsgemässen Kopiergeräts in Form eines Minilabs und
- Fig. 11: einen schematischen Schnitt durch das Kopiergerät der Fig.10.

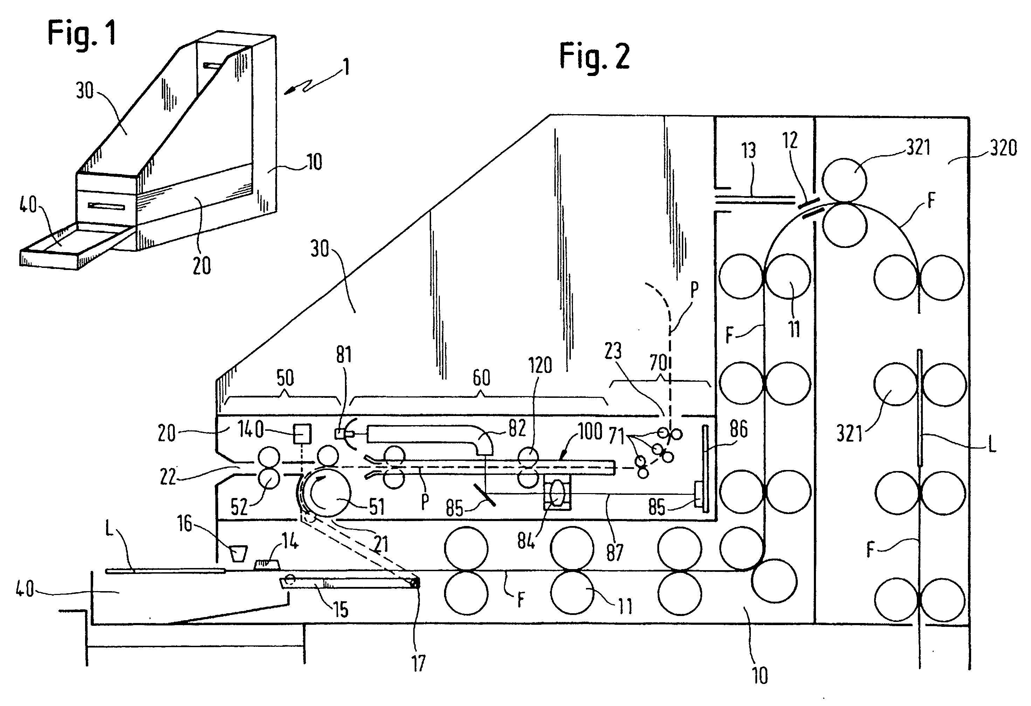

Der Gesamtaufbau der erfindungsgemässen Abtastvorrichtung ist aus Fig.1 ersichtlich. Die als Ganzes mit 1 bezeichnete Abtastvorrichtung umfasst einen Unterbau 10 in Form eines stehenden L, ein auf dem liegenden Schenkel des Unterbaus angeordnetes Scannergehäuse 20, in welchem sich die optischen und fotoelektrischen Komponenten der Abtastvorrichtung befinden, und einen auf dem Scannergehäuse 20 angeordneten Filmauffangbehälter 30 zur Aufnahme (normalerweise) abgetasteter Filme. Ferner ist an der Vorderseite des Unterbaus 10 noch eine Auffangschale 40 für sogenannte Leaderkarten vorgesehen, an welchen unentwickelte Filme üblicherweise für den Transport durch einen Filmprozessor befestigt werden. Im Unterbau 10 befinden sich weiter unten noch erläuterte Transportmittel zur Zufuhr von abzutastenden Filmen in das Scannergehäuse 20.

Wie die Schnittdarstellungen der Figuren 2-5 zeigen, ist das Scannergehäuse 20 mit einem unteren ersten Eingang 21, einem vorderen zweiten Eingang 22 und einem oberen Ausgang 23 ausgestattet und zwischen den beiden Eingängen und dem Ausgang räumlich in drei Zonen gegliedert, und zwar eine Zuführzone 50, eine Abtastzone 60 und eine Abführzone 70. In der Abtastzone 60 ist eine noch näher zu beschreibende, als Ganzes mit 100 bezeichnete, mit motorisch angetriebenen Transportrollen 120 versehene Wechselbühne zur Führung und Positionierung des abzutastenden Films F angeordnet. In der Zuführzone 50 befinden sich motorisch angetriebene Transportrollenpaare 51 und 52, welche einen durch die Eingänge 21 bzw. 22 eingeführten abzutastenden Film auf die Wechselbühne 100 führen. In der Abführzone 70 befinden sich weitere motorisch angetriebene Transportrollenpaare 71, welche den abgetasteten Film von der Wechselbühne 100 übernehmen und durch den Ausgang 23 in den Filmauffangbehälter 30 weitertransportieren. Die Transportrollen in der Zuführzone 50, an der Wechselbühne 60 und in der Abführzone 70 bilden also zusammen eine Transporteinrichtung, welche den abzutastenden Film F längs eines durch eine strichlierte Linie P angedeuteten Transportpfads durch die Abtastvorrichtung transportiert.

Neben den genannten mechanischen Komponenten für den Transport und die Positioniereng des Films beherbergt das Scannergehäuse 20 noch die optischen und fotoelektrischen Komponenten der Abtastvorrichtung. Im einzelnen sind dies eine ortsfest angeordnete Lichtquelle 81, eine durch ein Lichtleitfaserbündel gebildete, ebenfalls ortsfeste Lichtleiteranordnung 82, ein ortsfester Umlenkspiegel 83, eine der Anzahl der vorgesehenen Filmformate entsprechende Anzahl von auf der Wechselbühne 100 montierten Abbildungsobjektiven 84, eine ortsfeste fotoelektrische Wandlereinrichtung 85 und eine ebenfalls ortsfeste Elektronik 86 zur Aufbereitung, insbesondere Digitalisierung der von der Wandlereinrichtung erzeugten Abtastsignale. Der optische Abtaststrahlengang ist durch die Linie 87 angedeutet. Wie aus der Zeichnung unmittelbar erhellt, führt der Lichtleiter 82 das von der Lichtquelle 81 ausgehende Messlicht auf den auf der Wechselbühne 100 befindlichen abzutastenden Film und beaufschlagt diesen in einem schmalen, sich quer zur Transportrichtung des Films erstreckenden Messbereich (Messzeile). Das vom abgetasteten Film durchgelassene Messlicht gelangt durch eine entsprechende Ausnehmung in der Wechselbühne 100 hindurch auf den Umlenkspiegel 83 und wird von in noch zu beschreibender Weise in eines der Abbildungsobjektive 84 umgelenkt. Das betreffende Abbildungsobjektiv 84 lenkt das Messlicht auf die fotoelektrische Wandlereinrichtung 85 und bildet den mit Messlicht beaufschlagten Bereich (die Messzeile) des abgetasteten Films auf die Wandlereinrichtung 85 ab. Letztere ist z.B. durch eine Fotodiodenzeile oder eine zeilenförmige Anordnung von CCD-Elementen gebildet und wandelt das empfangene Messlicht in entsprechende elektrische Abtastsignale um, die von der Elektronik 86 aufbereitet (digitalisiert) werden und eine bildelementweise Repräsentation der Bildinhalte des abgetasteten Films darstellen. Dabei ist in an sich bekannter Weise die örtliche Auflösung quer zur Filmtransportrichtung durch Grösse und Abstand der einzelnen Elemente der Wandlereinrichtung und die Auflösung in Filmtransportrichtung durch die Breite (Dicke) der Messzeile sowie die Transportgeschwindigkeit des Films festgelegt. Durch Einsatz von (nicht gezeigten) Farbfiltem oder einer entsprechend farbselektiven Wandlereinrichtung (z.B. nach Art einer CCD-Farbfernsehkamera) können für jedes abgetastete Bildelement die Transmissions- oder Dichtewerte in den üblichen Farben rot, blau, grün ermittelt werden. Durch Anordnung eines dispersiven Elements im Abtaststrahlengang 87 und entsprechende Ausbildung der Wandlereinrichtung 85 können aber auch fiir jedes Bildelement des abzutastenden Films die spektralen Transmissions- bzw. Dichtewerte an mehr oder weniger vielen Stützstellen (Wellenlängen) bestimmt werden. Prinzipielle Scanner-Anordnungen zur punktweisen Ermittlung von Farbdichten oder Spektren sind dem Fachmann an sich bekannt und bedürfen daher soweit keiner weiteren Erläuterung.

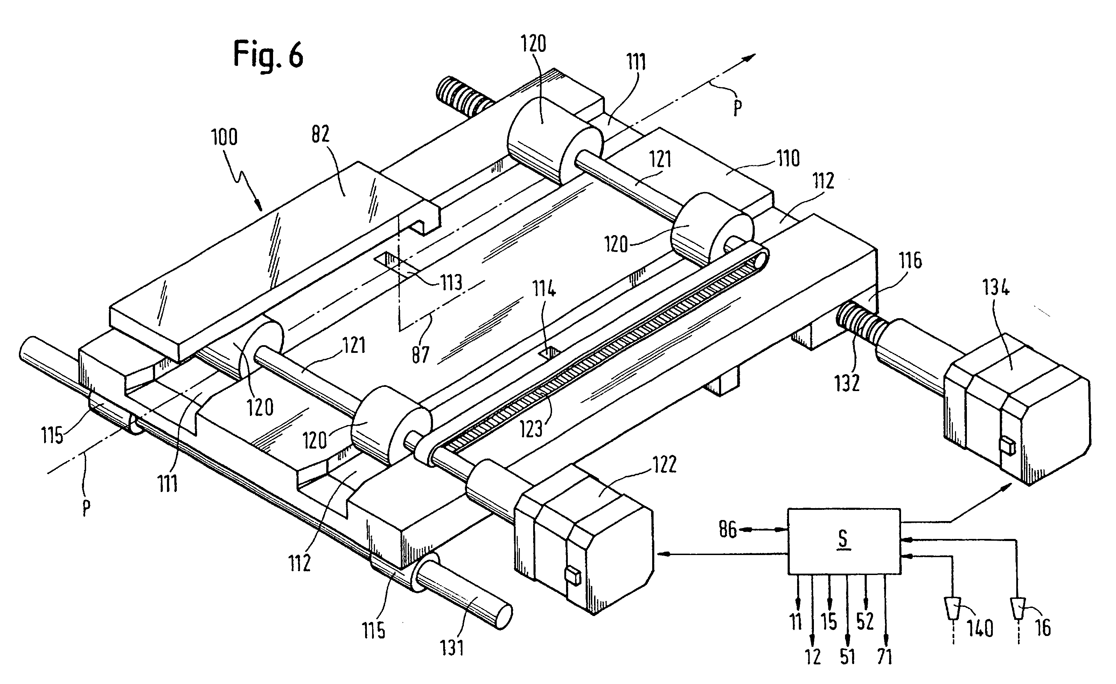

Der L-förmige Unterbau 10 der Abtastvorrichtung 1 bildet im wesentlichen eine Schnittstelle zu einer Speisestation für abzutastende Filme, wobei es sich im praktischen Einsatz in einem fotografischen Kopiergerät üblicherweise um einen Filmprozessor handelt, in welchem der belichtete Film vor der Abtastung entwickelt und getrocknet wird. In den Figuren 2-5 ist der als Trockner ausgebildete obere Teil 320 eines solchen Filmprozessors schematisch dargestellt. Der Unterbau 10 enthält Einrichtungen, um einen typischerweise an einer Leaderkarte L befestigten Film F direkt übernehmen, die Leaderkarte abtrennen und den Film F durch den unteren Eingang 21 in das Scannergehäuse 20 einführen zu können. Diese Einrichtungen umfassen im wesentlichen Transportmittel in Form von motorisch angetriebenen Transportrollenpaaren 11, eine Eingangsweiche 12, eine Führungsbrücke 13, nicht dargestellte Filmleitorgane und eine aus einem feststehenden Messerbalken 14 und einem motorisch bzw. elektromagnetisch beweglichen Messer 15 bestehende Abtrennvorrichtung für Leaderkarten L. Die Transportrollenpaare 11, die Eingangsweiche 12, das Messer 15, die Transportrollenpaare 51, 52 und 53 im Scannergehäuse 20 und die Transportrollen 120 auf der Wechselbühne 100 sowie diese selbst sind durch eine in Fig.6 nur symbolisch dargestellte elektronische Steuerung S angesteuert, welche in an sich bekannter Weise durch einen entsprechend programmierten Rechner in Verbindung mit entsprechenden Schnittstellen realisiert ist und entweder eigenständig in der Abtastvorrichtung 1 vorhanden oder aber durch einen Teil der Steuerung eines Kopiergeräts, in welchem die Abtastvorrichtung eingesetzt ist, gebildet sein kann.

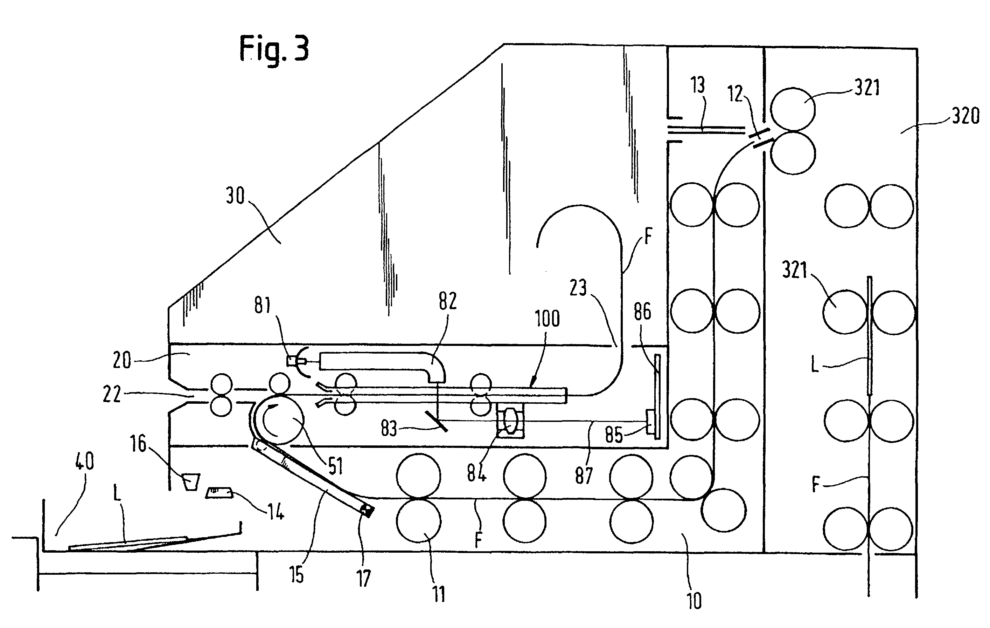

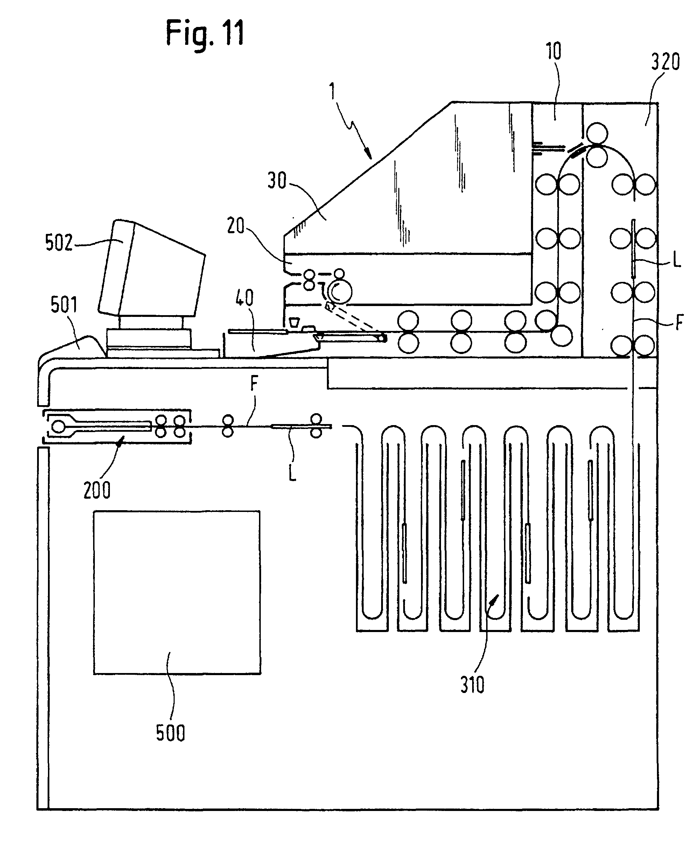

Die Figuren 2 und 3 zeigen, wie ein abzutastender Film F vom vorgeschalteten Trockner 320 übernommen und automatisch durch die Abtastvorrichtung 1 geführt wird. Im Trockner 320 und in der diesem vorangehenden nasschemischen Behandlungsstation 310 des Filmprozessors (Fig. 11) wird der Film F an einer Leaderkarte L hängend mittels Transportrollen 321 transportiert. Eine den Trockner 320 verlassende Leaderkarte L gelangt mit dem an ihr hängenden Film F in die Eingangsweiche 12 und wird von dieser zu den Transportrollenpaaren 12 im Unterbau 10 geleitet. Diese fördern die Leaderkarte L zwischen dem Messerbalken 14 und dem beweglichen Messer 15 hindurch in den Bereich der Auffangschale 40 für die Leaderkarten L, wobei eine Lichtschranke 16 der Steuerung S den Einlauf der Leaderkarte L signalisiert (Fig.2). Nun bewegt die Steuerung S das um eine Achse 17 schwenkbare Messer 15 nach oben in die strichliert gezeigte Stellung, in der die freie Messerkante in unmittelbarer Nähe des unteren Eingangs 21 des Scannergehäuses 20 zu liegen kommt. Dabei wird der Film F von der Leaderkarte L abgeschnitten, und diese fällt in die Auffangschale 40. Nun befördert die Steuerung S den von der Leaderkarte abgetrennten Film mittels der Transportrollenpaare 12 durch den Eingang 21 in das Scannergehäuse 20, wo er vom Transportrollenpaar 51 erfasst und der Wechselbühne 100 zugeführt wird. Das Messer 15 dient dabei als Leitorgan für den Filmanfang. Von der Wechselbühne 100 gelangt der Film F dann über die Transportrollenpaare 71 durch den Ausgang 23 in den Filmauffangbehälter 30 (Fig.3).

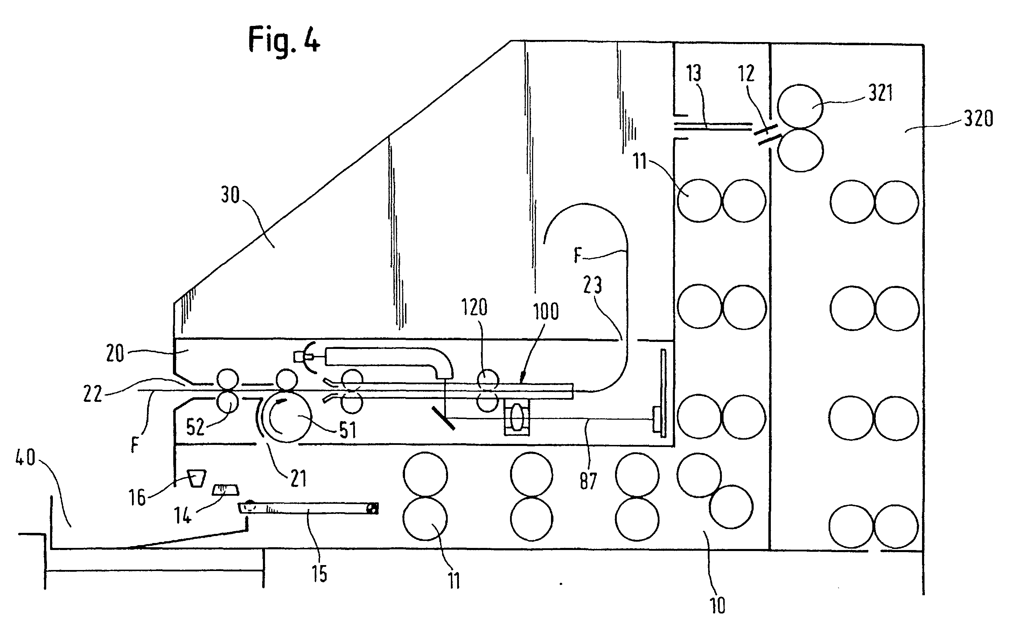

Entwickelte Filme F (ohne Leaderkarte) können der Abtastvorrichtung 1 auch manuell über den vorderen Eingang 22 des Scannergehäuses 20 zugeführt werden (Fig.4). Dabei wird der eingeführte Film F vom hinter dem Eingang befindlichen Transportwalzenpaar 52 erfasst und auf das Transportwalzenpaar 51 weitergegeben, von wo dann der Weitertransport gleich wie im Zusammenhang mit den Figuren 2 und 3 beschrieben erfolgt.

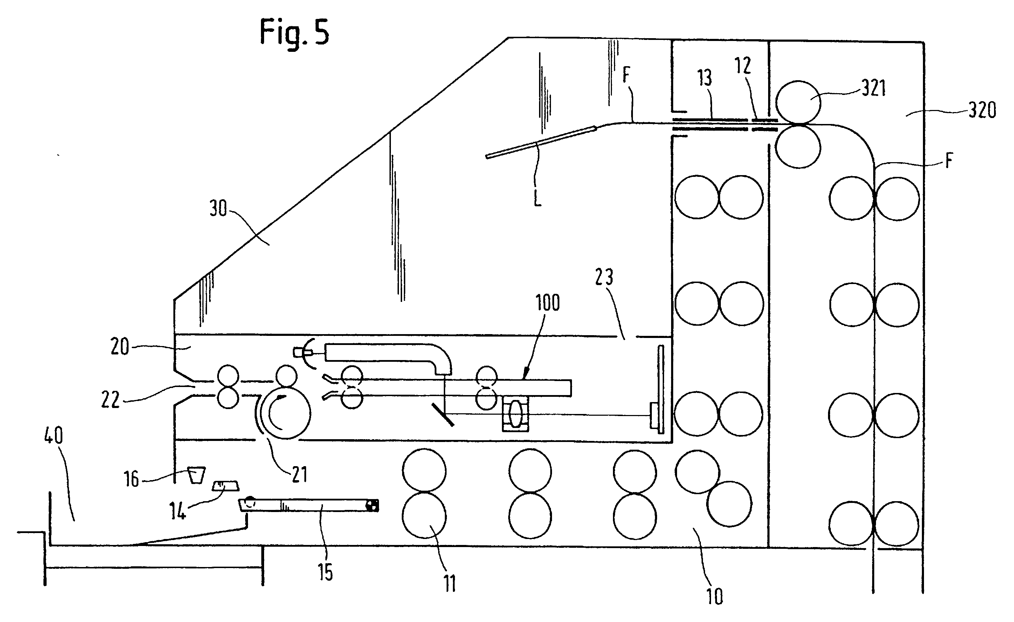

In Fig. 5 ist ferner noch dargestellt, wie ein aus dem Trockner 320 kommender Film F ohne Abtastung direkt in den Filmauffangbehälter 30 geleitet werden kann. Zu diesem Zweck wird die Eingangsweiche 12 in die gezeigte Stellung gebracht, wobei die Leaderkarte L mit dem an ihr hängenden Film F mittels der Führungsbrücke 13 in den Auffangbehälter 30 gelenkt wird.

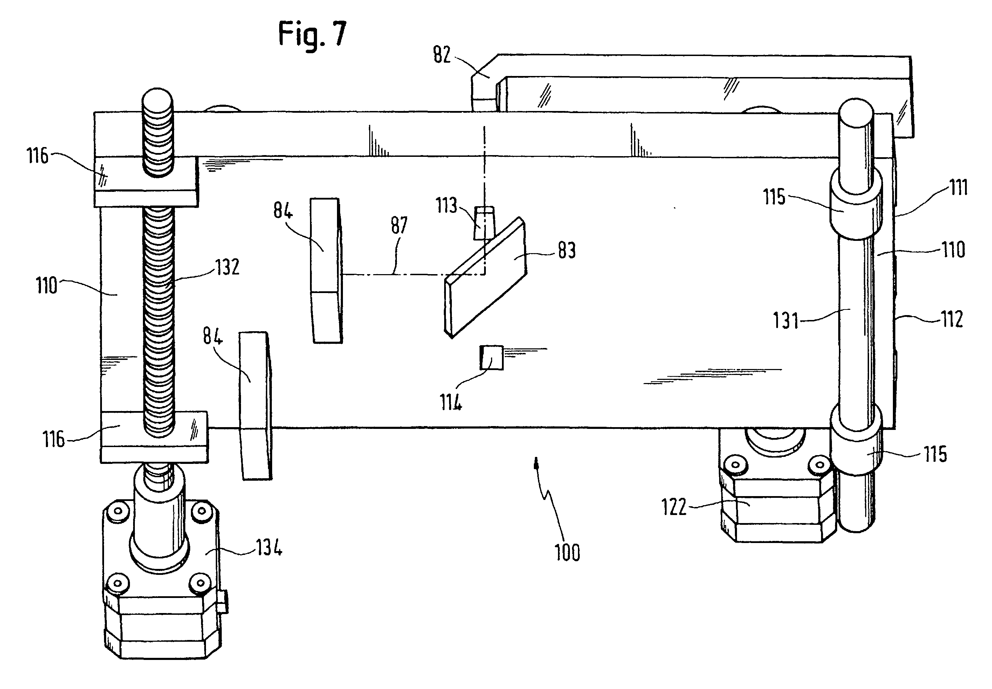

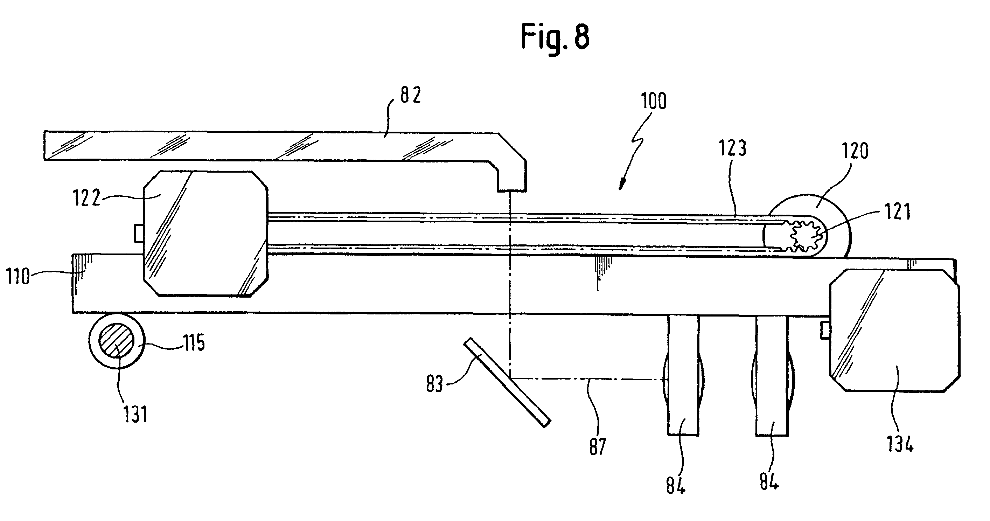

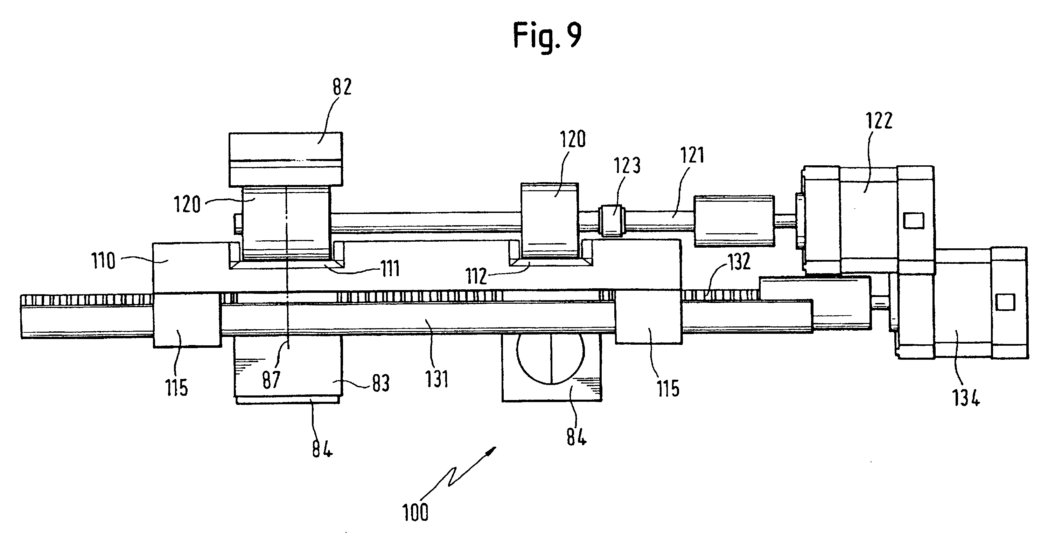

Im folgenden werden der Aufbau und die Funktionsweise der Wechselbühne 100 anhand der Figuren 6-9 näher beschrieben.

Die Wechselbühne 100 umfasst eine im wesentlichen ebene Grundplatte 110, in deren oberer Seite zwei parallele, rinnenförmige Führungskanäle 111 und 112 eingelassen sind. Diese dienen als Führungsorgane für abzutastende Filme F und sind in ihrer Breite auf zwei unterschiedliche Filmformate (Filmbreiten), beispielsweise etwa 135-er-Filme und APS-Filme, exakt abgestimmt. Etwa in der Mitte jedes Führungskanals 111 und 112 ist die Grundplatte 110 durch je ein schmales rechteckiges Abtastfenster 113 bzw. 114 durchbrochen, welches sich quer zur Längsrichtung des jeweiligen Führungskanals erstreckt. Auf der Grundplatte 110 sind vier paarweise auf zwei Wellen 121 sitzende Transportrollen 120 in nicht gezeigten Lagern drehbar gelagert und durch einen ebenfalls auf der Grundplatte 110 (in nicht gezeigter Weise) montierten Motor 122 und einen die beiden Wellen koppelnden Zahnriemen 123 drehbar angetrieben. Jeweils zwei Transportrollen 120 greifen in einen der beiden Führungskanäle 111 und 112 hinein und dienen zum Transport des darin geführten Films.

Die Grundplatte 110 ist an ihrer Unterseite mit zwei Gleitlagern 115 und zwei Spindellagern 116 ausgestattet. Die beiden Gleitlager 115 nehmen eine Gleitstange 131 in sich auf, welche im Scannergehäuse 20 ortsfest montiert ist. In den beiden Spindellagern 116 ist eine Antriebsspindel 132 drehbar gelagert, welche im von einem ebenfalls ortsfest im Scannergehäuse 20 montierten Antriebsmotor 134 drehbar angetrieben ist. Die Gleitstange 131 und die Antriebsspindel 132 erstrecken sich im rechten Winkel quer zur Längsrichtung der beiden Führungskanäle 111 und 112. Mittels der vom Motor 134 angetriebenen Antriebsspindel 132 kann die Grundplatte 110 quer zur Längsrichtung der beiden Führungskanäle 111 und 112 und damit zur Transportrichtung der in diesen geführten Filme F verstellt werden, wobei sie mit ihren Gleitlagern 115 auf der Gleitstange 131 gleitet. Durch diese Querverstellung der Grundplatte 110 kann jeweils derjenige Führungskanal 111 bzw. 112, der dem Format des abzutastenden Films entspricht, in den Transportpfad P des Films eingebracht werden, so dass der Film während der Abtastung exakt geführt wird und Positionierungsfehler bei der Abtastung vermieden werden. Die Verstellung der Wechselbühne 100 bzw. ihrer Grundplatte 110 erfolgt vorzugsweise automatisch, kann aber selbstverständlich auch manuell geschehen. Die automatische Verstellung erfolgt durch die Steuerung S, die dazu mit einem an einem passenden Ort im Transportpfad P des Films F angeordneten Sensor 140, z.B. einer Lichtschranke, für die Filmbreite zusammenarbeitet. Beispielsweise kann der Sensor wie in Fig. 2 gezeigt im Bereich des Transportrollenpaars 51 angeordnet sein, was den Vorteil hat, dass damit sowohl über den Eingang 21 als auch über den manuellen Eingang 22 zugeführte Filme erfasst werden können.

Die Anordnung der optischen Komponenten der Abtastvorrichtung ist aus den Figuren 6-9 ebenfalls gut erkennbar. Die ortsfeste Lichtleiteranordnung 82 ist so über dem Transportpfad P des Films angeordnet, dass sich ihr austrittsseitiges Ende exakt oberhalb des Abtastfensters des jeweils aktiven, in den Transportpfad eingeschalteten Führungskanals befindet, der abzutastende Film also genau im Bereich dieses Abtastfensters mit Messlicht beaufschlagt wird. Entsprechend befindet sich der ebenfalls ortsfeste Umlenkspiegel 83 genau unterhalb des austrittsseitigen Endes der Lichtleiteranordnung 82 auf der diesem gegenüberliegenden Seite der Grundplatte 110. Die Abbildungsoptiken 84 sind an der Unterseite der Grundplatte 110 montiert und demzufolge mit dieser mitbeweglich. Jedem Führungskanal 111 bzw. 112 ist je eine eigene Abbildungsoptik 84 zugeordnet, wobei nur die dem jeweils aktiven Führungskanal zugeordnete Abbildungsoptik im Abtaststrahlengang liegt. Die beiden Abbildungsoptiken sind bezüglich Vergrösserungsmassstab und Position so justiert, dass sie die von Messlicht beaufschlagte Messzeile der abzutastenden Filme korrekt auf die im Scannergehäuse ortsfest montierte fotoelektrische Wandlereinrichtung 85 abbilden.

Es versteht sich, dass die Wechselbühne 100 nicht auf zwei unterschiedliche Filmformate beschränkt ist, sondern auch für mehrere Filmformate ausgebildet sein kann. Es bräuchten dazu lediglich mehrere Führungskanäle oder entsprechende Führungsorgane vorgesehen zu sein, welche selektiv in den Transportpfad des Films eingebracht werden können. Alternativ zu einer querverstellbaren Grundplatte könnte die Wechselbühne auch mit mehreren parallelen Grundplatten versehen sein, welche durch entsprechendes Verstellen senkrecht zur Plattenebene in den Filmtransportpfad eingebracht werden können.

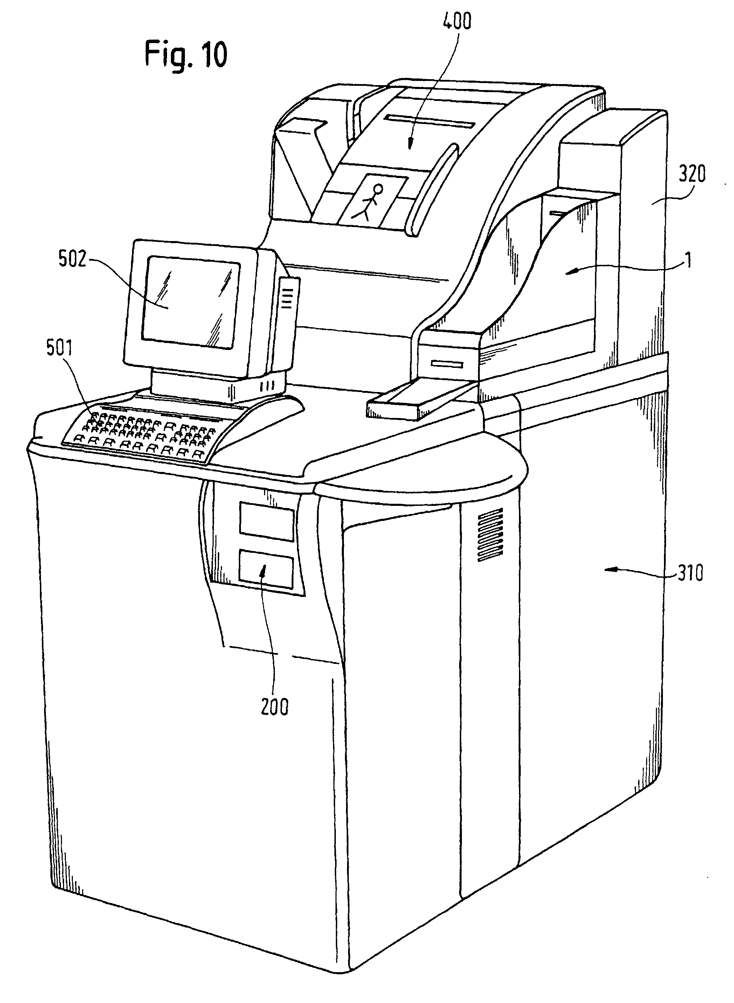

Die Figuren 10 und 11 zeigen ein mit der erfindungsgemässen Abtastvorrichtung 1 ausgestattetes fotografisches Kopiergerät in Form eines digitalen Minilabs. Das in seinem äusseren Aspekt im wesentlichen bekannten Minilabs entsprechende Minilab umfasst, teils innerhalb seines Gehäuses, teils auf bzw. an seinem Gehäuse, eine Ladestation 200 für belichtete, zu kopierende Filme, einen aus einem nasschemischen Teil 310 und einem Trockner 320 bestehenden Filmprozessor, die Abtastvorrichtung 1 für die entwickelten Filme, eine Bildherstellungseinrichtung 400 z.B. in Form eines digitalen Farbdruckers oder einer digitalen Belichtungseinrichtung (z.B. Laser-Belichtungseinrichtung oder CRT-Belichtungseinrichtung) und eine digitale Steuerung 500 mit einer Tastatur 501 und einem Monitor 502 als Benutzerschnittstelle. Die Abtastvorrichtung 1 ist mit dem Ausgang des Trockners 320 gekoppelt und übernimmt die entwickelten Filme F direkt (in-line) von diesem. Die Steuerung 500 steuert auch die Abtastvorrichtung 1 und bereitet die von der Abtasteinrichtung 1 erzeugten Abtastsignale so für die digitale Bildherstellungseinrichtung 400 auf, dass diese daraus körperliche Bilder erzeugen kann, welche den gewünschten Kopien der auf dem Film enthaltenen Bilder entsprechen. Dabei kann auch eine Bildbearbeitung nach an sich bekannten Kriterien und ggf. auch durch manuellen Eingriff über die Tastatur erfolgen. Gewünschtenfalls können die Kopien auch mit zusätzlichen Informationen oder Bild- und Textelementen versehen werden. Femer ist auch die Erstellung von sog. Indexprints möglich.

## Patentansprüche

1. Abtastvorrichtung zur im wesentlichen punktweisen fotoelektrischen Ausmessung eines fotografischen Films (F) oder eines vergleichbaren transparenten Messobjekts, mit einer Transporteinrichtung (51,52,120,53) zum Transportieren des Films (F) längs eines Transportpfads (P) durch eine Abtastzone (60), einer Führungseinrichtung (100) zum Führen und Positionieren des Films (F) in der Abtastzone, einer Beleuchtungseinrichtung (81,82) zum Beaufschlagen des in der Abtastzone befindlichen Films (F) mit Messlicht, einer fotoelektrischen Wandlereinrichtung (85) zur Umwandlung des vom Film (F) durchgelassenen Messlichts in entsprechende elektrische Signale und mit optischen Mitteln (83,84), um das vom abgetasteten Film (F) durchgelassene Messlicht auf die fotoelektrische Wandlereinrichtung (85) zu lenken, wobei die Führungseinrichtung eine in der Abtastzone (60) angeordnete, insbesondere motorisch selektiv verstellbare Wechselbühne (100) umfasst, welche zur mechanischen Führung und Positionierung von Filmen (F) mindestens zweier unterschiedlicher Formate ausgebildet ist, wobei die Beleuchtungseinrichtung (81,82) und die optischen Mittel (83,84) an gegenüberliegenden Seiten der Wechselbühne (100) angeordnet sind und dass Abtastfenster (113,114) vorgesehen sind, durch welches das vom abgetasteten Film (F) durchgelassene Messlicht hindurchtritt, **dadurch gekennzeichnet, dass**
- die Wechselbühne (100) eine mit mindestens zwei Führungskanälen (111,112) versehene Grundplatte (110) aufweist, welche quer zum Transportpfad (P) des Films (F) verschiebbar angeordnet ist, wobei die Führungskanäle (111,112) insbesondere motorisch selektiv in den Transportpfad (P) des Films (F) einbringbar sind, wobei
- die fotoelektrische Wandlereinrichtung (85) außerhalb der Grundplatte (110) ortsfest angeordnet ist und dass jedem Führungskanal (111,112) mindestens ein Abbildungsoptiken (84) umfassen des optisches Mittel (83,84) zugeordnet ist, welche den mit Messlicht beaufschlagten Bereich des abgetasteten Films (F) auf die fotoelektrische Wandlereinrichtung (85) abbilden, wobei die Abbildungsoptik dem jeweiligen Führungskanals zugeordnete mit diesem mitbeweglich montiert ist.

2. Vorrichtung nach Anspruch 1, **dadurch gekennzeichnet, dass** die Abbildungsoptiken an der Grundplatte (110) mit dieser mitbeweglich montiert sind.

3. Vorrichtung nach Anspruch 1 oder 2, **dadurch gekennzeichnet, dass** ein Sensor (140) für das Format des abzutastenden Films (F) sowie eine mit dem Sensor zusammenwirkende Steuerung (S) vorgesehen sind, welche eine automatische Verstellung der Wechselbühne (100) in Abhängigkeit des Filmformats bewirken.

4. Vorrichtung nach einem der Ansprüche 1 bis 3, **dadurch gekennzeichnet, dass** die Beleuchtungseinrichtung (81,82) eine ortsfeste Lichtquelle (81) und eine ebenfalls ortsfeste Lichtleiteranordnung (82) umfasst, welch letztere den abzutastenden Film (F) im Bereich des Abtastfensters (113 ,114) des im Transportpfad (P) befindlichen Führungskanals (111, 112) der Grundplatte (110) mit Messlicht beaufschlagt.

5. Vorrichtung nach einem der Ansprüche 1 bis 4, **dadurch gekennzeichnet, dass** die optischen Mittel (83,84) einen ortsfesten Umlenkspiegel (83) umfassen, welcher das vom abgetasteten Film (F) durchgelassene Messlicht jeweils in diejenige Abbildungsoptik (84) umlenkt, welche dem im Transportpfad (P) befindlichen Führungskanal (111,112) zugeordnet ist.

6. Vorrichtung nach einem der vorangehenden Ansprüche, **dadurch gekennzeichnet, dass** sie einen ersten Eingang (21) und diesem zugeordnete Transportmittel (11) aufweist, welche einen abzutastenden Film (F) von einer vorgeschalteten Speisestation (320) übernehmen und in den ersten Eingang (21) einführen.

7. Vorrichtung nach Anspruch 6, **dadurch gekennzeichnet, dass** sie einen zweiten Eingang (22) zum manuellen Zuführen eines abzutastenden Films (F) aufweist.

8. Vorrichtung nach einem der Ansprüche 6 oder 7, **dadurch gekennzeichnet, dass** dem ersten Eingang (21) eine Abtrenneinrichtung (14,15) vorgeschaltet ist, welche eine mit dem abzutastenden Film (F) verbundene Leaderkarte (L) vom Film abtrennt, wobei die Transportmittel (11) den Film (F) nach dem Abtrennen der Leaderkarte (L) in den ersten Eingang (21) einführen.

9. Fotografisches Kopiergerät, insbesondere zur Verarbeitung von Einzelfilmen ausgelegtes Minilab, mit einem Filmprozessor (310,320) zur Entwicklung und Trocknung von belichteten fotografischen Filmen sowie mit Mitteln (400), um von den auf den Filmen enthaltenen Bildern Kopien auf einem Trägermaterial zu erstellen, **gekennzeichnet durch** eine Abtastvorrichtung (1) gemäss einem der vorangehenden Ansprüche.

10. Kopiergerät nach Anspruch 9, **dadurch gekennzeichnet, dass** die Abtastvorrichtung (1) gemäss Anspruch 8 ausgebildet ist und die Filme (F) automatisch vom Filmprozessor (310,320) über die Abtrenneinrichtung (14,15) in die Abtastvorrichtung (1) transportiert werden.

11. Kopiergerät nach Anspruch 9 oder 10, **dadurch gekennzeichnet, dass** die Mittel (400) zur Erstellung von Kopien durch eine digitale Bilderzeugungseinrichtung, insbesondere eine digitale Belichtungseinrichtung oder einen Farbdrucker, gebildet sind, welche digitale Bilderzeugungseinrichtung mit den von der Abtastvorrichtung (1) erzeugten und entsprechend aufbereiteten, die Bildinhalte der abgetasteten Filme repräsentierenden Abtastsignalen angesteuert wird.

## Claims

1. Scanning apparatus for the essentially point-by-point photoelectric measuring up of a photographic film (F) or a comparable transparent subject to be measured, with a transport device (51, 52, 120, 53) to transport the film (F) along a transport pathway (P) through a scanning zone (60), a guide device (100) to guide and position the film (F) in the scanning zone, an illumination device (81, 82) to expose the film (F) in the scanning zone to measurement light, a photoelectric transducer device (85) to convert the measurement light allowed to pass through by the film (F) into corresponding electrical signals, and with optical means (83, 84) to deflect the measurement light allowed to pass through by the scanned film (F) onto the photoelectric transducer (85), whereby the guide device comprises an interchangeable stage (100) arranged in the scanning zone (60), especially one that is selectively adjustable by motor drive, that is designed to mechanically guide and position films (F) of at least two different formats, whereby the illumination device (81, 82) and the optical means (83, 84) are arranged on opposite sides of the interchangeable stage (100) and in that scanning windows (113, 114) are provided, through which the measurement light transmitted by the scanned film (F) passes, **characterized in that**
- the interchangeable stage (100) has a baseplate (110) that is provided with at least two guide channels (111, 112) and is arranged so that it can be shifted at right angles to the transport pathway of the film (F), whereby the guide channels (111, 112) can be introduced selectively, especially by motor drive, into the transport path (P) of the film (F), whereby
- the photoelectric transducer device (85) is arranged in a fixed location outside the baseplate (110) and **in that** each guide channel (111, 112) comprises at least one imaging optical system (84), assigned to the optical means (83, 84), which image the area of the scanned film (F) exposed to the measurement light onto the photoelectric transducer device (85), whereby the imaging optics assigned to the respective guide channel is mounted so as to be moveable together with the latter.

2. Apparatus according to Claim 1, **characterized in that** the imaging optics are mounted on the baseplate (110) so as to be movable together with the latter.

3. Apparatus according to Claim 1 or 2, **characterized in that** a sensor (140) for the format of the film (F) being scanned together with a controller (S) acting in concert with the sensor are provided and cause the interchangeable stage (100) to be repositioned automatically depending on the film format.

4. Apparatus according to one of the Claims 1 to 3, **characterized in that** the illumination device (81, 82) comprises a fixed-position light source (81) and a light guide arrangement (82), also fixed-position, the latter of which exposes the film (F) to be scanned to measurement light in the area of the scanning window (113, 114) of the baseplate (110) guide channel (111, 112) situated in the transport pathway (P).

5. Apparatus according to one of the Claims 1 to 4, **characterized in that** the optical means (83, 84) comprise a fixed-position deflection mirror (83) that deflects the measurement light transmitted by the scanned film (F) on each occasion into that imaging optics (84) that is assigned to the guide channel (111, 112) situated in the transport path (P).

6. Apparatus according to one of the foregoing Claims, **characterized in that** it has a first entrance (21) and means of transport (11) assigned to the latter, which accept a film to be scanned (F) from an upstream feeder station (320) and introduce it into the first entrance (21).

7. Apparatus according to Claim 6, **characterized in that** it has a second entrance (22) to introduce a film to be scanned (F) manually.

8. Apparatus according to one of the Claims 6 or 7, **characterized in that** upstream of the first entrance (21) there is a cut-off device (14, 15) that separates from the film a leader card (L) attached to the film to be scanned (F), whereby the means of transport (11) introduce the film (F) into the first entrance after the leader card (L) has been cut off.

9. Photographic copying equipment, especially a Minilab designed to process individual films, with a film processor (310, 320) to develop and dry exposed photographic films together with means (400) to prepare prints on a substrate material of the images contained in the films, **characterized by** a scanning apparatus (1) according to one of the foregoing claims.

10. Copying device according to Claim 9, **characterized in that** the scanning apparatus (1) is constructed according to Claim 8 and the films (F) are transported automatically from the film processor (310, 320 into the scanning apparatus (1) via cut-off device (14, 15).

11. Copying equipment according to Claim 9 or 10, **characterized in that** the means (400) to prepare prints consists of a digital imaging device, in particular a digital illumination device or a colour printer, this digital imaging device being driven by the scanning signals generated by the scanning apparatus (1), appropriately processed and representing the image contents of the scanned films.

## Revendications

1. Dispositif de balayage pour la mesure photoélectrique, sensiblement ponctuelle, d'un film photographique (F) ou d'un objet de mesure transparent comparable, comportant un dispositif de transport (51, 52, 120, 53) pour transporter le film (F) le long d'une voie de transport (P) à travers une zone de balayage (60), un dispositif de guidage (100) pour guider et positionner le film (F) dans la zone de balayage, un dispositif d'éclairage (81, 82) pour exposer le film (F) se trouvant dans la zone de balayage à une lumière de mesure, un dispositif de conversion photoélectrique (85) pour convertir la lumière de mesure, ayant traversé le film (F), en signaux électriques correspondants et comportant des moyens optiques (83, 82) pour diriger la lumière de mesure, ayant traversé le film (F) balayé, sur le dispositif de conversion photoélectrique (85), le dispositif de guidage comprenant un changeur (100) disposé dans la zone de balayage (60) et en particulier réglable de manière sélective par moteur, lequel est conçu pour le guidage et le positionnement mécaniques de films (F) d'au moins deux formats différents, le dispositif d'éclairage (81, 82) et les moyens optiques (83, 84) étant disposés sur des côtés opposés du changeur (100), et des fenêtres de balayage (113, 114), à travers lesquelles passe la lumière de mesure qui a traversé le film (F) balayé, étant prévues, **caractérisé en ce que**
- le changeur (100) comporte une plaque de base (110) pourvue d'au moins deux canaux de guidage (111, 112) qui sont disposés de manière à pouvoir coulisser transversalement à la voie de transport (P) du film (F), les canaux de guidage (111, 112) pouvant être introduits, en particulier de manière sélective et par moteur, dans la voie de transport (P) du film (F),
- le dispositif de conversion photoélectrique (85) étant disposé fixement au-dessous de la plaque de base (110) et **en ce qu'**à un canal de guidage (111, 112) est associé au moins un moyen optique (83, 84) qui comprend des optiques de reproduction (84) lesquelles reproduisent la zone recevant la lumière de mesure du film (F) balayé, sur le dispositif de conversion photoélectrique (85), l'optique de reproduction, associée au canal de guidage respectif, étant montée de manière à pouvoir se déplacer avec celui-ci.

2. Dispositif selon la revendication 1, **caractérisé en ce que** les optiques de reproduction sont montées sur la plaque de base (110) de manière à pouvoir se déplacer avec celle-ci.

3. Dispositif selon la revendication 1 ou 2, **caractérisé en ce que** sont prévus un capteur (140) pour le format du film (F) à balayer ainsi qu'une commande (S) coopérant avec le capteur, lesquels provoquent un réglage automatique du changeur (100) en fonction du format du film.

4. Dispositif selon l'une des revendications 1 à 3, **caractérisé en ce que** le dispositif d'éclairage (81, 82) comprend une source de lumière (81) fixe et un guide optique (82) également fixe, ce dernier envoyant la lumière de mesure sur le film (F) à balayer, dans la zone de la fenêtre de balayage (113 ; 114) du canal de guidage (111, 112) se trouvant dans la voie de transport (P), de la plaque de base (110).

5. Dispositif selon l'une des revendications 1 à 4, **caractérisé en ce que** les moyens optiques (83, 84) comprennent un miroir de déviation (83) fixe qui dévie la lumière de mesure qui a traversé le film (F) balayé, dans l'optique de reproduction (84) qui est associée au canal de guidage (111, 110) se trouvant dans la voie de transport (P).

6. Dispositif selon l'une des revendications précédentes, **caractérisé en ce qu'**il comporte une première entrée (21) et des moyens de transport (11) associés à celle-ci, lesquels reprennent un film (F) à balayer d'un poste d'alimentation (320) amont et l'introduisent dans la première entrée (21).

7. Dispositif selon la revendication 6, **caractérisé en ce qu'**il comporte une deuxième entrée (22) pour l'amenée manuelle d'un film (F) à balayer.

8. Dispositif selon l'une des revendications 6 ou 7, **caractérisé en ce qu'**en amont de la première entrée (21) est monté un dispositif de séparation (14, 15) qui sépare du film une carte guide (L), reliée au film (F) à balayer, les moyens de transport introduisant le film (F), après la séparation de la carte guide (L), dans la première entrée (21).

9. Tireuse photographique, en particulier mini-laboratoire conçu pour le traitement de films individuels, comportant un processeur de films (310, 320) pour le développement et le séchage de films photographiques insolés ainsi que des moyens (400) pour réaliser sur un matériau de support des copies des images contenues sur les films, **caractérisée par** un dispositif de balayage (1) selon l'une des revendications précédentes.

10. Tireuse selon la revendication 9, **caractérisée en ce que** le dispositif de balayage (1) est conçu selon la revendication 8, et les films (F) sont automatiquement transportés depuis le processeur de films (310, 320), à travers le dispositif de séparation (14, 15), dans le dispositif de balayage (1).

11. Tireuse selon la revendication 9 ou 10, **caractérisée en ce que** les moyens (400) pour réaliser des copies sont formés par un dispositif numérique de production d'images, en particulier un dispositif numérique d'insolation ou une imprimante couleurs, lequel dispositif numérique de production d'images est commandé par les signaux de balayage produits par le dispositif de balayage (1) et traités en conséquence, qui représentent les contenus des image des films balayés.
